# EUROPÄISCHE PATENTANMELDUNG

(11) **EP 1 767 909 A1**
(43) Veröffentlichungstag der Anmeldung: **28.03.2007**
(21) Anmeldenummer: 05108726.0
(22) Anmeldetag: 21.09.2005
(51) Int. Cl.: G01G 23/01

(54) **Mehrfachwägevorrichtung mit einer Kalibriervorrichtung**

(71) Anmelder: Mettler-Toledo AG, 8606 Greifensee (CH)
(72) Erfinder: Burkhard, Hans-Rudolf, 8492, Wila (CH); Emery, Jean-Christophe, 8005, Zürich (CH)

(57) **Zusammenfassung**

Eine Mehrfachwägevorrichtung 10 mit mindestens zwei in vorgegebener räumlicher Anordnung miteinander starr verbundenen, unabhängig voneinander betreibbaren Wägemodulen 20A, 20B weist mindestens einen Transfermechanismus 30 auf, mittels dem die jedem Wägemodul 20A, 20B zugeordneten Kalibriergewichte 40A, 40B gleichzeitig bewegt, mit den Kalibriergewichtaufnahmen 61A, 61 B der zugeordneten Wägemodule 20A, 20B gekoppelt beziehungsweise von diesen entkoppelt werden.

## Beschreibung

Die vorliegende Erfindung bezieht sich auf eine Mehrfachwägevorrichtung mit mindestens zwei in vorgegebener räumlicher Anordnung miteinander starr verbundenen, unabhängig voneinander betreibbaren Wägemodulen, wobei jedes Wägemodul einen Lastaufnahmebereich mit einem Lastaufnehmer und eine mit dem Lastaufnahmebereich in Verbindung stehende Kalibriergewichtaufnahme aufweist. Die Mehrfachwägevorrichtung weist zudem pro Wägemodul mindestens ein Kalibriergewicht auf, welches mit der Kalibriergewichtaufnahme des zugeordneten Wägemoduls koppelbar beziehungsweise von dieser entkoppelbar ist.

Mehrfachwägevorrichtungen finden bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Einsatzgebiete von solchen integrierten Wägemodulen sind Anlagen für die Produktion und Überprüfung von kleinen, relativ teueren Teilen, beispielsweise in Abfüll- und Verpackungsmaschinen für Tabletten, Kapseln, Ampullen, etc. in der Pharmaindustrie, oder bei der Kontrolle von Kugellagern. Beim Wiegen mit Mehrfachwägevorrichtungen, beispielsweise dem so genannten Batch-Wiegen, handelt es sich um einen Vorgang, bei dem mehrere Lasten individuell zu wiegen sind, sei dies zum Zwecke des Kontrollierens, des Dosierens oder des Abfüllens etc. auf engem Raum. Auch in Anlagen, welche nach dem Prinzip des kombinatorischen Verwiegens arbeiten, werden solche Wägemodule eingesetzt.

Da die Wägegüter mittels einer Beschickungsvorrichtung, beispielsweise eines Roboterarms mit Mehrfachgreifer, auf die einzelnen Lastaufnehmer der Wägemodule aufgebracht beziehungsweise nach dem Wägevorgang wieder entfernt werden, müssen die einzelnen Lastaufnehmer zueinander und gegenüber der Beschickungseinrichtung genau und dauerhaft positioniert sein.

Derartige Mehrfachwägevorrichtungen sind im Stand der Technik bekannt. Dabei handelt es sich vorwiegend um Reihen- oder Flächenanordnungen von Wägemodulen.

Weitere Anordnungen stellen darauf ab, die Wägemodule in einer Flächenanordnung satellitenartig um eine Reihenanordnung von Lastträgern, welche an die Abstände der Zufuhrelemente einer vorhandenen Beschickungsvorrichtung anzupassen sind zu platzieren, da häufig das einzelne Wägemodul zu gross ist, um die von der Beschickungsvorrichtung vorgegebenen Abstände der Lastträger einzuhalten.

Gerade die vorangehend erwähnten Einsatzgebiete erfordern Wägemodule, die eine hohe Genauigkeit aufweisen. Diese ist nur dauerhaft zu erreichen, wenn in gewissen zeitlichen Abständen oder nach bestimmten Ereignissen wie beispielsweise Störungen die Wägezellen der Wägemodule kalibriert werden. Elektronische Waagen werden häufig mittels eines internen Kalibriergewichts kalibriert. Für eine Kalibrierung wird ein Kalibriergewicht mit einer definierten Masse mit der in einer Wägezelle einer Waage angeordneten Kraftübertragungsvorrichtung oder mit dem Lastaufnahmebereich der Wägezelle in Kraftkontakt gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung oder dem Lastaufnahmebereich wieder gelöst und das Kalibriergewicht in einer Ruheposition arretiert. Das Kalibriergewicht wird dabei durch einen Transfermechanismus aus einer Ruheposition in eine Kalibrierposition und zurück bewegt. In der Kalibrierposition steht das Kalibriergewicht in Kraftkontakt mit der Wägezelle beziehungsweise mit dem Lastaufnahmebereich; in der Ruheposition besteht kein Kraftkontakt. Bei vielen Waagen sind die Kalibriergewichtanordnung und die Wägezelle hintereinander angeordnet, wie es in der EP 0 955 530 A1 offenbart ist.

In der CH 650337 A5 wird für eine Analysenwaage mit parallel geführtem Lastaufnahmebereich und seitlich der Parallelführung angeordnetem Lastaufnehmer beispielsweise vorgeschlagen, unter dem Lastaufnehmer und benachbart zu diesem ein Kalibriergewicht anzuordnen. Das Kalibriergewicht weist die Form eines liegenden U auf und hat seinen Schwerpunkt unter demjenigen des Lastaufnehmers. Damit ergibt sich eine besonders raumsparende und einfache Anordnung des Kalibriergewichtes, die zudem eine bedienungsfreundliche Handhabung ermöglicht.

Die Anordnung mehrerer, analog zu diesem Beispiel ausgerüsteter Wägemodule erfordert jedoch viel Bauraum, da jedes Wägemodul eine eigene Kalibriervorrichtung aufweist. Derartige Anordnungen sind auf Grund des erforderlichen Bauraums und der vielen erforderlichen Teile auch sehr teuer.

Aufgabe der vorliegenden Erfindung ist es daher, eine kostengünstige Mehrfachwägevorrichtung mit einer möglichst geringen räumlichen Ausdehnung zu schaffen, deren Wägemodule bezüglich ihrer Wägeperformance anderen Waagen mit interner Kalibrierung ebenbürtig sind.

Gelöst wird diese Aufgabe mit den Merkmalen des Anspruchs 1. Eine Mehrfachwägevorrichtung beinhaltet mindestens zwei in vorgegebener räumlicher Anordnung miteinander starr verbundene, unabhängig voneinander betreibbare Wägemodule, wobei jedes Wägemodul einen Lastaufnahmebereich mit einem Lastaufnehmer und eine mit dem Lastaufnahmebereich in Verbindung stehende Kalibriergewichtaufnahme aufweist. Als Lastaufnahmebereich wird dabei jeder, zur Messung einer Last beweglich ausgebildeter Bereich des Wägemoduls beziehungsweise der im Wägemodul angeordneten Wägezelle bezeichnet. Zum Lastaufnahmebereich kann somit jeder Teil einer Kraftübertragungsvorrichtung, der zur Über- oder Untersetzung der zu messenden Kraft dient, ebenso gehören wie ein Verbindungsgestänge zwischen der Wägezelle und dem Lastaufnehmer oder sogar der bewegliche Teil einer Parallelführung des beweglichen Bereiches der Wägezelle.

Die Mehrfachwägevorrichtung beinhaltet zudem mindestens einen Transfermechanismus und mindestens je ein, einem jeden Wägemodul zugeordnetes Kalibriergewicht, welches mit der Kalibriergewichtaufnahme des zugeordneten Wägemoduls koppelbar beziehungsweise von dieser entkoppelbar ist. Unter Kalibriergewichtaufnahme ist derjenige Teil des Wägemoduls zu verstehen, der das Kalibriergewicht aufnimmt und mit diesem Kalibriergewicht während des Kalibriervorganges in Kraftkontakt ist. Der mindestens eine Transfermechanismus weist miteinander verbundene Kalibriergewichtauflagestellen für die Kalibriergewichte von mindestens zwei zugeordneten Wägemodulen auf. Die Kalibriergewichtauflagestellen sind vorzugsweise an einer gemeinsamen Kalibriergewichtauflage ausgebildet. Noch vorteilhafter ist eine starre Verbindung der Kalibriergewichtauflagestellen untereinander für die Kalibriergewichte von mindestens zwei zugeordneten Wägemodulen. Die Kalibriergewichtauflage ist ebenfalls Teil des Transfermechanismus. Solange die Wägemodule nicht kalibriert werden, liegen die Kalibriergewichte auf den Kalibriergewichtauflagestellen auf. Auch wenn an der Kalibriergewichtauflage die Kalibriergewichtauflagestellen zusammenhängend ausgebildet sind, beispielsweise in Form einer, über die gesamte Länge der Kalibriergewichtauflage verlaufenden Nut, gilt diese Nut als mindestens zwei Kalibriergewichtauflagestellen, da mindestens zwei voneinander unabhängige Kalibriergewichte in der Ruheposition darin aufliegen.

Selbstverständlich können auch mehrere Kalibriergewichte pro Wägezelle mit demselben Transfermechanismus aufgelegt werden, um beispielsweise einen Kalibrierablauf zu ermöglichen, wie er in EP 0 020 030 A1 oder in CH 671 102 A5 offenbart wird. Der Transfermechanismus beinhaltet eine Kalibriergewichtauflage mit den daran ausgebildeten Kalibriergewichtauflagestellen, ein Hebewerk und einen Antrieb.

Selbstverständlich ist auch eine erfindungsgemässe Mehrfachwägevorrichtung mit mehreren Transfermechanismen möglich, wobei mindestens einem dieser Transfermechanismen mindestens zwei Wägemodule mit ihren Kalibriergewichten zugeordnet sind. Sofern die Mehrfachwägevorrichtung mehrere Transfermechanismen beinhaltet, können diese auch einen gemeinsamen Antrieb aufweisen.

Die erfindungsgemässe Mehrfachwägevorrichtung mit ihrer Anordnung von mindestens einem Transfermechanismus mit mehreren Kalibriergewichten für mehrere Wägemodule, weist grosse Vorteile gegenüber der Anordnung von mehreren, aus dem Stand der Technik bekannten Wägemodulen mit eigener Kalibriervorrichtung auf. Abgesehen von einer Reduktion der Produktionskosten, die vor allem durch eine massive Teilereduktion erwirkt wird, bewirkt die Teilereduktion auch eine Reduktion der Störungsanfälligkeit der Mehrfachwägevorrichtung. Durch die erfindungsgemässe Mehrfachwägevorrichtung kann zudem der Raumbedarf wesentlich verringert werden. Die Verwendung eines Antriebs oder weniger Antriebe in der Mehrfachwägevorrichtung resultiert in einer reduzierten Wärmeentwicklung, was das Temperaturdriftverhalten der Wägemodule positiv beeinflusst. Zudem kann der Raum um die Wägezellen herum sehr knapp gehalten werden. Durch eine geeignete Ausgestaltung des Transfermechanismus kann dessen Kalibriergewichtauflage der Abschirmung von Einflüssen auf die Wägezellen der Wägemodule dienen, welche beispielsweise von Bauteilen und Baugruppen der Signalverarbeitung oder der Stromversorgung ausgehen. Als Wägezellen sind alle bekannten Wägezellentypen wie Wägezellen mit elektromagnetischer Kraftkompensation, Wägezellen mit Dehnungsmessstreifen, Wägezellen die nach dem gyrodynamischen Prinzip arbeiten, Wägezellen die nach dem Schwingsaitenprinzip arbeiten, Wägezellen mit kapazitiven oder induktiven Messumformern und dergleichen mehr einsetzbar. Da mehrere oder alle Kalibriergewichte durch die erfindungsgemässe Anordnung gleichzeitig aufgelegt werden, wird die Kalibrierungszeit der Mehrfachwägevorrichtung zudem minimiert.

Als Antrieb für den Transfermechanismus können verschiedene Antriebe wie Servomotoren, Linearmotoren, Spindelantriebe, Riemenantriebe, magnetische Antriebe oder ein mit einer Heizvorrichtung zusammenwirkender Draht aus einer Formgedächtnislegierung verwendet werden. Auch eine manuell betätigbare Antriebsvorrichtung in Form einer Betätigungstaste, eines Hebels und dergleichen ist einsetzbar. Das Hebewerk kann eine Welle mit einer oder mehreren Steuerscheiben, eine Hebeanordnung mit Keilen oder vorzugsweise eine Anordnung mit mindestens einem Kniegelenk aufweisen.

Eine besonders kompakte Mehrfachwägevorrichtung kann erreicht werden, wenn die Kalibriergewichtauflagen zwischen den Lastaufnehmern und den Lastaufnahmebereichen der Wägemodule angeordnet sind. Die Kalibriergewichtauflage kann aber auch auf der den Lastaufnehmern abgewandte Seiten der Wägemodule angeordnet sein.

Bevorzugt wird aufgrund des geringen Raumbedarfs eine Kalibriergewichtauflage die im Wesentlichen plattenförmig ausgebildet ist und Kalibriergewichtauflagestellen in Form von Durchbrüchen aufweist.

In einer weiteren Ausführung kann die Kalibriergewichtauflage eine Rahmenstruktur aufweisen, wobei die Kalibriergewichtauflagestellen in Form von mit dem Rahmen starr verbundenen Stützen ausgebildet sind.

Besonders einfach sind Kalibriergewichtauflagen in Form von Gittern oder in einem Rahmen gehaltener Stangen herstellbar. Selbstverständlich können alle beschriebenen Kalibriergewichtauflagen auch einstückig ausgebildet sein.

Sofern die Kalibriergewichte reihenweise aufgelegt werden sollen, bietet sich auch jeweils eine Exzenterwelle pro Wägemodul- Reihe an, mit deren Hilfe die Kalibriergewichte simultan aufgelegt werden können. Abhängig von der Einbaulage dieser Wellen sind möglicherweise auch Stössel notwendig, an denen die eigentliche Kalibriergewichtauflage beziehungsweise die Kalibriergewichtauflagestellen ausgebildet sind. Obwohl die Stössel nicht miteinander starr verbunden sein müssen und eine Relativbewegung zwischen Exzenterwelle und Stössel stattfindet, sind die Stössel als reine Übertragungsglieder anzusehen. Die Wirkung der Exzenterwelle ist damit eine Kombination von Hebewerk und Kalibriergewichtauflage. Analog zur Wirkungsweise der vorangehend beschriebenen Ausführungsbeispiele sind hier als Kalibriergewichtauflagestellen die Exzenterscheiben zu betrachten und nicht die Auflageenden der Übertragungsglieder.

Unabhängig davon, ob und wie viele bewegliche Übertragungsglieder der Transfermechanismus zwischen den Kalibriergewichtauflagestellen und den Kalibriergewichten aufweist, ist jeweils als Kalibriergewichtauflage derjenige mechanische Teil zu betrachten, durch dessen Bewegungsablauf die Kalibriergewichte mindestens zweier Wägemodule gleichzeitig mit den Kalibriergewichtauflagen der Wägemodule gekoppelt beziehungsweise entkoppelt werden. Dabei sind als Kalibriergewichtauflagestellen diejenigen Berührungsstellen anzusehen, die mit den das Kalibriergewicht tragenden Übertragungsgliedern in Kontakt stehen und diese bewegen, auch wenn dadurch die Kalibriergewichte nicht direkt auf diesen Kalibriergewichtauflagestellen aufliegen. Diese Lösungen sind alle äquivalent und gehören daher zum Erfindungsgegenstand.

Besonders vorteilhaft ist es, wenn die Kalibriergewichtauflage aus einem elektrischen Strom leitenden, nichtmagnetischen Werkstoff besteht um zu vermeiden, dass beispielsweise eine durch Reibung verursachte elektrostatische Aufladung der Kalibriergewichtauflage oder eine durch die Magnetfelder der Wägezellen magnetisierte Kalibriergewichtauflage das Messergebnis der Wägemodule beeinflusst.

Je nach Anordnung der Kalibriergewichtauflagen müssen die damit korrespondierenden Kalibriergewichtaufnahmen der Wägemodule entsprechend ausgestaltet und angeordnet sein. Aus dem Stand der Technik sind viele Lösungen für einzelne Wägemodule bekannt bei denen am Lastaufnahmebereich der Wägezelle eines Wägemoduls oder an dem zwischen dem Lastaufnahmebereich und dem Lastaufnehmer angeordneten Kraftübertragungsgestänge Kalibriergewichtaufnahmen ausgebildet sind. Diese variieren von einfachen Haken über präzise gearbeitete Nuten, Bundauflagestellen, Pfannen etc. Sofern das Wägemodul eine Wägezelle mit einer Kraftübertragungsvorrichtung aufweist wie sie beispielsweise in der EP 0 955 530 B1 offenbart ist, kann die Verbindung der Kalibriergewichtaufnahme mit dem Lastaufnahmebereich, beispielsweise in Form eines Hebels, an einer beliebigen Stelle der Kraftübertragungsvorrichtung erfolgen.

Die Kalibriergewichte können in Ringform, in U- Form, in Kegelform, in Kugelform oder in Zylinderform ausgebildet sein. Die U- Form ist dann eine besonders bevorzugte Ausgestaltung, wenn das Kalibriergewicht zwischen dem Lastaufnehmer und dem Lastaufnahmebereich der Wägezelle angeordnet ist.

Um eine präzise Kalibrierung zu ermöglichen, muss das Kalibriergewicht innerhalb gewisser Toleranzen auf die Kalibriergewichtaufnahme aufgelegt werden. Dies ist umso wichtiger, wenn die Kalibriergewichtkraft mittels Hebel übersetzt werden soll. In diesen Fällen ist es zwingend notwendig, dass das Kalibriergewicht mindestens ein Positionierungsmittel zur räumlichen Positionierung des Kalibriergewichts bezüglich der Kalibriergewichtaufnahme und gegebenenfalls auch bezüglich der Kalibriergewichtauflagestelle aufweist.

Das Kalibrierverfahren einer Mehrfachwägevorrichtung in der vorangehend ausführlich beschriebenen Ausgestaltung unterscheidet sich von der Kalibrierung eines normalen Wägemoduls mit interner Kalibrierung dadurch, dass bei der Mehrfachwägevorrichtung die Kalibriergewichte mindestens zweier Wägemodule durch mindestens einen Transfermechanismus gleichzeitig bewegt und mit den Kalibriergewichtaufnahmen der Wägemodule gekoppelt beziehungsweise entkoppelt werden. Je nach Anordnung der Kalibriergewichtauflagestellen in Relation zu den Kalibriergewichtaufnahmen, beispielsweise durch unterschiedlich abgestufte Kalibriergewichtauflagestellen, kann der Kraftkontakt zwischen den einzelnen Kalibriergewichten und den Kalibriergewichtaufnahmen trotz gleichzeitiger Bewegung der Kalibriergewichte zu unterschiedlichen Zeitpunkten erfolgen. Sofern jeweils zwei Kalibriergewichte jeweils einer Wägezelle zugeordnet sind, kann die gesamte Mehrfachwägevorrichtung mittels eines Kalibrierablaufs kalibriert werden, wie er beispielsweise in der EP 0 020 030 A1 beschrieben ist.

Einzelheiten der erfindungsgemässen Mehrfachwägevorrichtung ergeben sich anhand der Beschreibung der in den Zeichnungen dargestellten Ausführungsbeispiele. Es zeigen:
- Fig. 1: eine perspektivische Darstellung einer Mehrfachwägevorrichtung mit zwei Wägemodulen und mit zwischen den Wägemodulen und den Lastaufnehmern angeordnetem Transfermechanismus in Plattenform, sowie mit einem schematisch dargestellten Hebewerk in Form einer Hebeanordnung mit Keilen;
- Fig. 2: eine perspektivische Darstellung einer Mehrfachwägevorrichtung mit sechs Wägemodulen, deren Wägezellengehäuse monolithisch miteinander verbunden sind, und mit drei Transfermechanismen, wobei jeweils die Kalibriergewichte zweier Wägemodule je einem Transfermechanismus zugeordnet sind, zwei der drei Transfermechanismen einen gemeinsamen Antrieb aufweisen und zwei unterschiedliche Antriebe eingesetzt werden;
- Fig. 3: eine schematische, perspektivische Darstellung eines Transfermechanismus mit einer Kalibriergewichtauflage in Form einer Exzenterwelle und mit Übertragungsgliedern, sowie mit Kalibriergewichten in unterschiedlichen Ausführungen;
- Fig. 4: ein rotationssymmetrisches Kalibriergewicht in seiner Einbauumgebung in der Kalibrierposition, wobei Figur 4a die Seitenansicht im Schnitt und Figur 4b die Ansicht von Oben zeigen;
- Fig. 5: das im Wesentlichen der Figur 4 entsprechende Kalibriergewicht in seiner Einbauumgebung in der Ruheposition, wobei das Kalibriergewicht zum leichteren Ein- und Ausbau über einen Schlitz verfügt und wobei die Figur 5a die Seitenansicht im Schnitt und die Figur 5b die Ansicht von Oben zeigen.

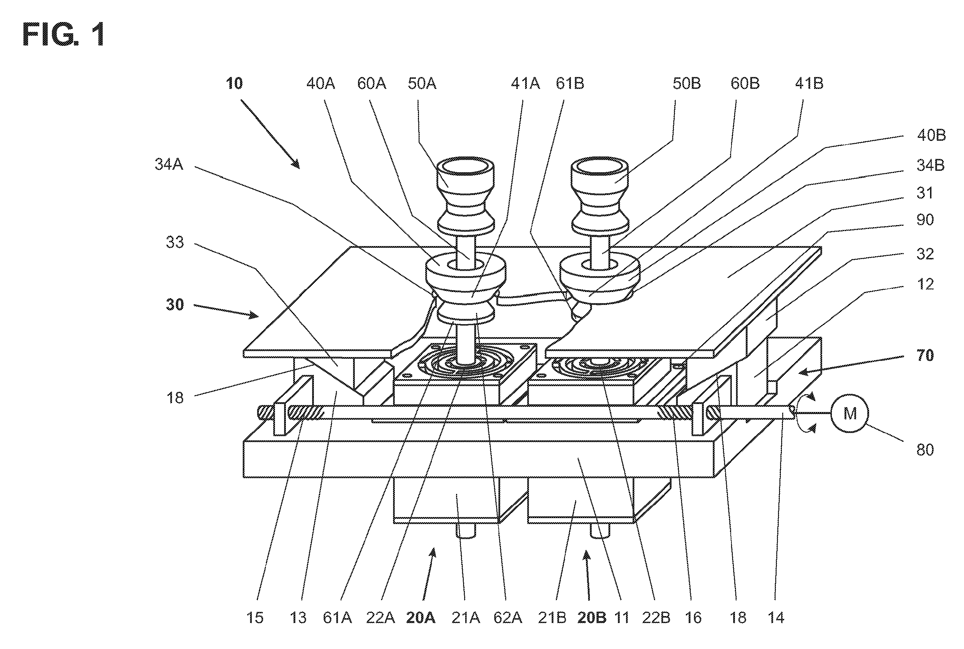

In Figur 1 ist die perspektivische Darstellung einer Aufnahmestruktur 11 mit zwei Wägemodulen 20A, 20B dargestellt, welche eine erfindungsgemässe Mehrfachwägevorrichtung 10 bilden. Jedes Wägemodul 20A, 20B weist eine Wägezelle 21A, 21 B mit einem Lastaufnahmebereich 22A, 22B auf. Die Wägezellen 21A, 21 B der Wägemodule 20A, 20B weisen zudem je eine, hier nicht dargestellte, im Innern der Wägezellen 21A, 21 B eingebaute Anordnung von Spule und Magnet auf, die mit den Lastaufnahmebereichen 22A, 22B verbunden sind. Ausgehend von den Lastaufnahmebereichen 22A, 22B erstreckt sich jeweils entgegen der Lastrichtung ein Kraftübertragungsgestänge 60A, 60B, an dessen Ende jeweils ein Lastaufnehmer 50A, 50B angebracht ist. Oberhalb der Lastaufnehmer 50A, 50B befindet sich üblicherweise der Operationsraum einer nicht dargestellten Beschickungsanlage.

Die Wägemodule 20A, 20B sind durch Befestigungsmittel 90, beispielsweise Schrauben mit der Aufnahmestruktur 11 starr verbunden.

Zwischen den Lastaufnehmern 50A, 50B und den Wägezellen 21A, 21 B ist ein Transfermechanismus 30 mit einer plattenförmigen Kalibriergewichtauflage 31 angeordnet, an welcher die Kalibriergewichtauflagestellen 34A, 34B für die den Wägemodulen 20A, 20B zugeordneten Kalibriergewichte 40A, 40B ausgebildet sind. Die Kalibriergewichte 40A, 40B werden durch den Transfermechanismus 30 von der Ruheposition in die Kalibrierposition und von der Kalibrierposition wieder in die Ruheposition transferiert.

An jedem Kraftübertragungsgestänge 60A, 60B ist mindestens eine Kalibriergewichtaufnahme 61A, 61 B ausgebildet, mit welcher das Kalibriergewicht 40A, 40B in der Kalibrierposition in Kraftkontakt steht. Idealerweise verfügen die Kalibriergewichte 40A, 40B und/oder die Kalibriergewichtaufnahmen 61A, 61 B beziehungsweise die Kalibriergewichtauflagestellen 34A, 34B über Positionierungsmittel 41A, 41 B, 62A, die das Kalibriergewicht 40A, 40B gegenüber der Kalibriergewichtaufnahme 61A, 61 B, beziehungsweise gegenüber dem Transfermechanismus 30 positionieren.

Der Transfermechanismus 30 weist nebst der Kalibriergewichtauflage 31 einen Antrieb 80 und ein Hebewerk 70 in Form einer Hebeanordnung mit Keilen auf. Die zwei gegen die Kalibriergewichtauflage 31 anliegenden Keile 32, 33 sind mit der Kalibriergewichtauflage 31 starr verbunden. Die damit korrespondierenden, und in der Aufnahmestruktur 11 geführten beweglichen Keile 12, 13, werden durch eine Spindel 14 mittels eines rechtsgängigen Spindelgewindes 16 und eines linksgängigen Spindelgewindes 15 linear zueinander hin respektive voneinander weg bewegt. Durch die sich dadurch gegeneinander verschiebenden Steilflächen 18 der Keile 12, 13, 32, 33 werden die Umdrehungen der Spindel 14 in Hub der Kalibriergewichtauflage umgesetzt. Es liegt im Rahmen des fachmännischen Tuns, dass ebenso die beweglichen Keile 12, 13 mit der Kalibriergewichtauflage 31 verschiebbar verbunden und die starr verbundenen Keile 32, 33 an der Aufnahmestruktur 11 festgelegt sein können. Der Antrieb der beweglichen Keile 12, 13 muss nicht zwingend über eine Spindel 14 erfolgen, es können beliebige Linearantriebe eingesetzt werden. Sogar mehrere, mechanisch voneinander getrennte Antriebe 80 wie beispielsweise ein Schrittmotor pro beweglicher Keil 12, 13 ist denkbar.

Selbstverständlich ist diese Anordnung nicht auf zwei Wägemodule 20A, 20B beschränkt. Es können beliebig viele Wägemodule in einer flächigen Anordnung hinter- und nebeneinander angeordnet werden, wobei jeweils die Kalibriergewichte mindestens zweier Wägezellen in der dargestellten Weise gleichzeitig durch mindestens einen Transfermechanismus 30 bewegt werden.

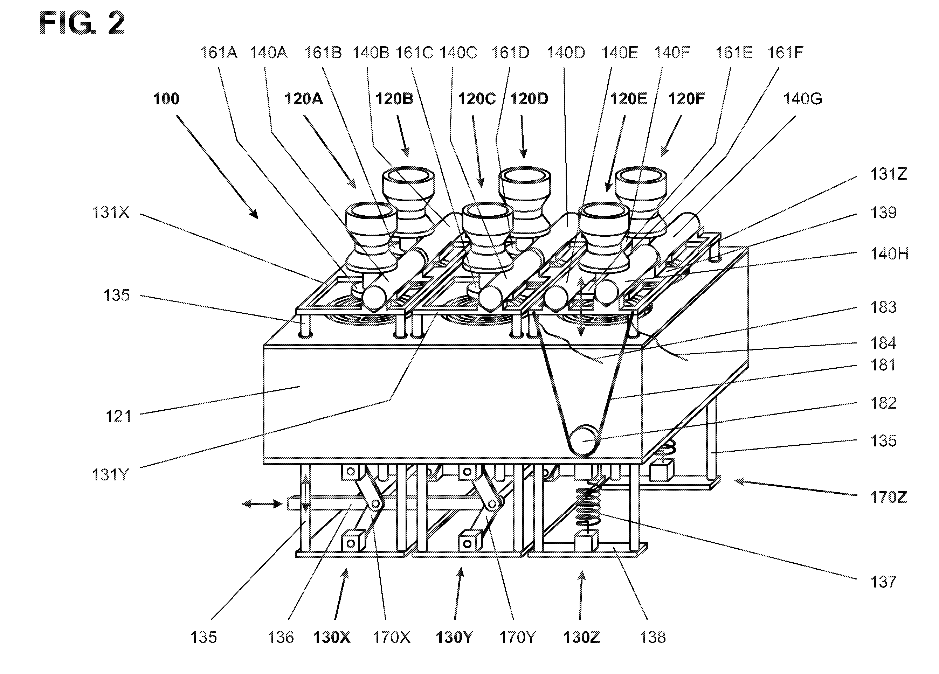

Figur 2 zeigt in perspektivischer Darstellung eine Mehrfachwägevorrichtung 100 mit sechs Wägemodulen 120A, 120B, 120C, 120D, 120E, 120F, deren Wägezellengehäuse 121 monolithisch miteinander verbunden sind. Der übrige Aufbau der Wägemodule 120A, 120B, 120C, 120D, 120E, 120F entspricht im Wesentlichen dem der Wägemodulen20A, 20B in Figur 1. Die Mehrfachwägevorrichtung 100 verfügt über drei Transfermechanismen 130X, 130Y, 130Z, wobei die Kalibriergewichte 140A, 140B der Wägemodule 120A, 120B dem Transfermechanismus 130X, die Kalibriergewichte 140C, 140D der Wägemodule 120C, 120D dem Transfermechanismus 130Y und die Kalibriergewichte 140E, 140F, 140G, 140H der Wägemodule 120E, 120F dem Transfermechanismus 130Z zugeordnet sind. An den Kraftübertragungsgestängen zwischen dem Wägezellengehäuse 121 und den Lastaufnehmern sind wie in Figur 1 Kalibriergewichtaufnahmen 161A, 161B, 161C, 161 D, 161 E, 161 F ausgebildet. Die Transfermechanismen 130X, 130Y, 130Z sind in einer Zwischenposition zwischen der Ruheposition und der Kalibrierposition dargestellt, in welcher die Kalibriergewichte 140A, 140B, 140C, 140D, 140E, 140F, 140G mit Ausnahme des Kalibriergewichts 140H gerade die Kalibriergewichtaufnahmen 161A, 161 B, 161C, 161 D, 161 E, 161 F berühren, das heisst, in der Übergabe- beziehungsweise in der Übernahmeposition.

Die rahmenförmig ausgestalteten Kalibriergewichtauflagen 131X, 131Y, 131Z der Transfermechanismen 130X, 130Y, 130Z sind analog der Figur 1 zwischen den Lastaufnehmern und den Wägezellen der Wägemodule angeordnet. Die Kalibriergewichtauflagestellen sind teilweise an Stegen 139 ausgebildet, sie können aber durchaus auch an auf den Kalibriergewichtauflagen 131X, 131Y, 131Z festgelegten Stützen ausgebildet sein. Die Hebewerke 170X, 170Y, 170Z der Transfermechanismen 130X, 130Y, 130Z sind jedoch auf der den Lastaufnehmern abgewandten Seite der Wägezellengehäuse 121 angeordnet und mit den Kalibriergewichtauflagen 131X, 131Y, 131Z durch im Wägezellengehäuse 121 linear geführte Schubstangen 135 verbunden.

Zwei Transfermechanismen 130X, 130Y weisen einen, hier nicht dargestellten, gemeinsamen Antrieb auf, dessen Linearbewegung mittels eines Verbindungsgestänges 136 auf die als Kniehebel ausgestalteten Hebewerke 170X, 170Y übertragen wird.

Der dritte Transfermechanismus 130Z der Mehrfachwägevorrichtung 100 unterscheidet sich wesentlich von den Transfermechanismen 130X, 130Y. Die Kalibriergewichtauflage 131 Z nimmt jeweils pro zugeordnetem Wägemodul 120E, 120F zwei Kalibriergewichte 140E, 140F, 140G, 140H auf. Je nach der Anordnung der Kalibriergewichte 140E, 140F, 140G, 140H auf der Kalibriergewichtauflage 131Z zueinander beziehungsweise zu den entsprechenden Kalibriergewichtsaufnahmen 161 E, 161 F, können beispielsweise zwischen der Kalibriergewichtaufnahme 161 E und den einzelnen Kalibriergewichten140E, 140H unterschiedliche Hübe in Lastrichtung von der Ruheposition bis zum Kraftkontakt mit der Kalibriergewichtaufnahme 161 E vorhanden sein. Mit einer derart ausgestalteten Kalibriergewichtauflage 131 Z können beispielsweise nicht nur die Kalibriergewichte 140F, 140G gleichzeitig auf die Kalibriergewichtaufnahme 161 F, sondern die Kalibriergewichte 140E, 140H nacheinander auf die Kalibriergewichtaufnahme 161 E der zugeordneten Wägemodule 120E, 120F aufgelegt werden.

Auf der den Lastaufnehmern abgewandten Seite des Wägezellengehäuses 121 wirken zwei Zugfedern 137 entgegen der Lastrichtung der Kalibriergewichte 140E, 140F, 140G, 140H über einen Verbindungssteg 138 auf die Schubstangen 135. Durch diese Anordnung werden die Kalibriergewichte 140E, 140F, 140G, 140H bei nicht aktiviertem Antrieb in ihrer Ruheposition gehalten. Der Antrieb, hier schematisch dargestellt, weist im wesentlichen einen SMA- Draht 181 auf, dessen Enden mit der Kalibriergewichtauflage 131Z verbunden sind. Mit dem Wägezellengehäuse 121 starr verbunden ist eine Umlenkrolle 182, über die der SMA- Draht 181 geführt ist. Über die Anschlüsse 183, 184 wird der SMA- Draht 181 mit Energie versorgt, der sich zusammenzieht, sobald eine Spannung an die Anschlüsse 183, 184 angelegt wird. Diese Zugkraft wirkt der Zugkraft der Zugfeder 137 entgegen wodurch sich die Kalibriergewichtauflage 131Z in Lastrichtung verschiebt und die Kalibriergewichte 140E, 140F, 140G, 140H an die Kalibriergewichtaufnahmen 161 E, 161 F der Wägemodule 120E, 120F übergibt. Nach dem Unterbruch der Energiezufuhr wird der SMA- Draht 181 durch die Zugkraft der Zugfeder 137 wieder gestreckt, die Kalibriergewichtauflage 131Z bewegt sich entgegen der Lastrichtung und hebt die Kalibriergewichte140E, 140F, 140G, 140H wieder von den Kalibriergewichtaufnahmen 161 E, 161 F ab.

Anstelle einer linearen Führung der Kalibriergewichtauflage 131 Z mittels Schubstangen 135 ist auch eine kippbare Kalibriergewichtauflage 131Z denkbar, deren Drehachse parallel zu den Mittellängsachsen der zylindrisch ausgebildeten Kalibriergewichte 140E, 140F, 140G, 140H angeordnet ist. Durch diese Anordnung wäre eine individuelle Übergabe jeweils zweier Kalibriergewichte 140E, 140F beim kippen in Richtung Uhrzeigersinn beziehungsweise zweier Kalibriergewichte 140G, 140G beim kippen in Richtung Gegenuhrzeigersinn an die Kalibriergewichtaufnahmen 161 E, 161 F möglich. Sofern die Drehachse einer derart ausgebildeten Kalibriergewichtauflage 131 Z noch in Lastrichtung linear verschiebbar ausgebildet ist, ermöglicht diese Anordnung einen Kalibriervorgang, wie er in der CH 671 102 A5 offenbart ist. Grundsätzlich kann auch eine identische Mechanik, wie sie in der CH 671 102 A5 offenbart ist verwendet werden, wobei die Kalibriergewichtauflage im Sinne der Erfindung die Kalibriergewichte mindestens zweier Wägemodule aufnehmen muss.

Üblicherweise werden bei der Anordnung mehrerer Transfermechanismen in einer Mehrfachwägevorrichtung gleichartige Transfermechanismen und Antriebe verwendet. Wie in Figur 2 dargestellt ist, ist eine Kombination verschiedener Bauarten von Transfermechanismen in derselben Mehrfachwägevorrichtung nicht ausgeschlossen. Dasselbe gilt auch für die Kombination verschiedenartiger Wägemodule zu einer Mehrfachwägevorrichtung und deren Kalibrierung im Sinne der offenbarten Erfindung.

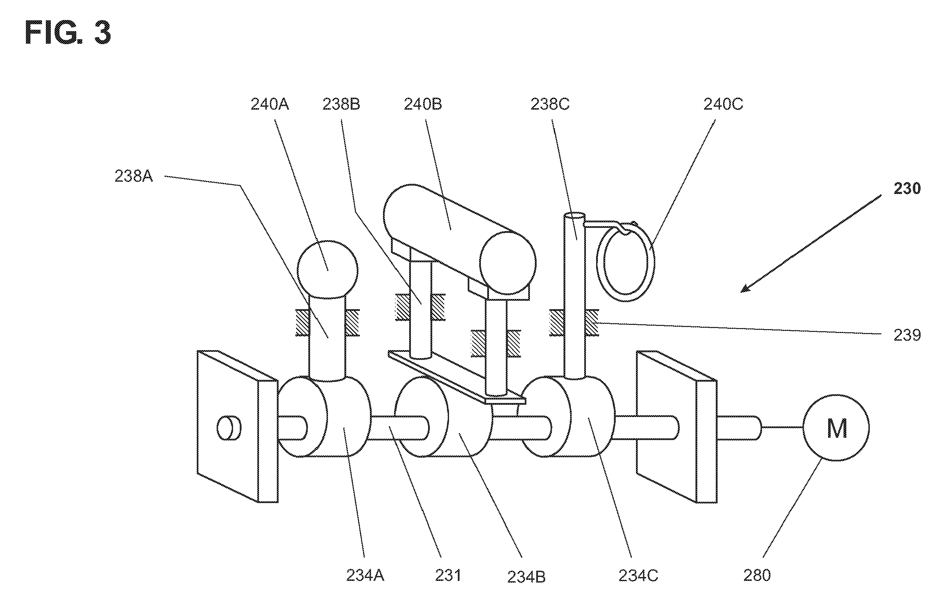

In Figur 3 ist ein Transfermechanismus 230 mit einer Kalibriergewichtauflage 231 in Form einer Exzenterwelle perspektivisch dargestellt, die durch einen schematisch dargestellten Antrieb 280 angetrieben wird. Die Figur 3 dient zur Visualisierung, dass die Kalibriergewichtauflage 231 nicht zwingend einen direkten Berührungskontakt mit den Kalibriergewichten 240A, 240B, 240C haben muss. Zudem vereinigt die dargestellte Kalibriergewichtauflage 231 durch ihre Ausgestaltung in Form einer Exzenterwelle einerseits die Funktion der Kalibriergewichtauflage und andererseits die Funktion des Hebewerks in sich. Die einzelnen Exzenter bilden die eigentlichen Kalibriergewichtauflagestellen 234A, 234B, 234C. Selbstverständlich müssen die Kalibriergewichtauflagestellen 234A, 234B, 234C auch nicht von der Welle abgesetzt sein, sondern können sich auch durchgehend über die ganze Länge der Welle erstrecken. Zwischen den Kalibriergewichtauflagestellen 234A, 234B, 234C und den Kalibriergewichten 240A, 240B, 240C sind Übertragungsglieder 238A, 238B, 238C angeordnet, die entsprechend den verwendeten Kalibriergewichten 240A, 240B, 240C ausgestaltet und beispielsweise durch Lager oder Führungen 239 mit einer Aufnahmestruktur, wie sie in Figur 1 dargestellt ist, verbunden sind. Dabei ist es unerheblich, wie viele starr miteinander verbundene oder auch beweglich miteinander verbundene Teile ein Übertragungsglied 238A, 238B, 238C aufweist. Die in unterschiedlichen Ausführungen dargestellten Kalibriergewichte 240A, 240B, 240C sollen lediglich aufzeigen, welche Möglichkeiten sich in Bezug auf die Gestaltung von Kalibriergewichten bieten, beispielsweise von der preiswerten Kugellagerkugel 240A über die gebräuchlichen Zylinderformen 240B bis hin zu Ringen 240C. Diese Aufzählung ist selbstverständlich nicht abschliessend und limitiert die Verwendung freier Formen für Kalibriergewichte in der offenbarten Mehrfachwägevorrichtung in keiner Weise. Auch die Exzenterwelle stellt nur eine Ausführungsform einer Kalibriergewichtauflage 231 dar. Jegliche Kalibriergewichtauflage für die Kalibriergewichte mehrerer Wägemodule mit zwischen den Kalibriergewichten und der Kalibriergewichtauflage angeordneten Übertragungsgliedern ist Gegenstand der offenbarten Erfindung.

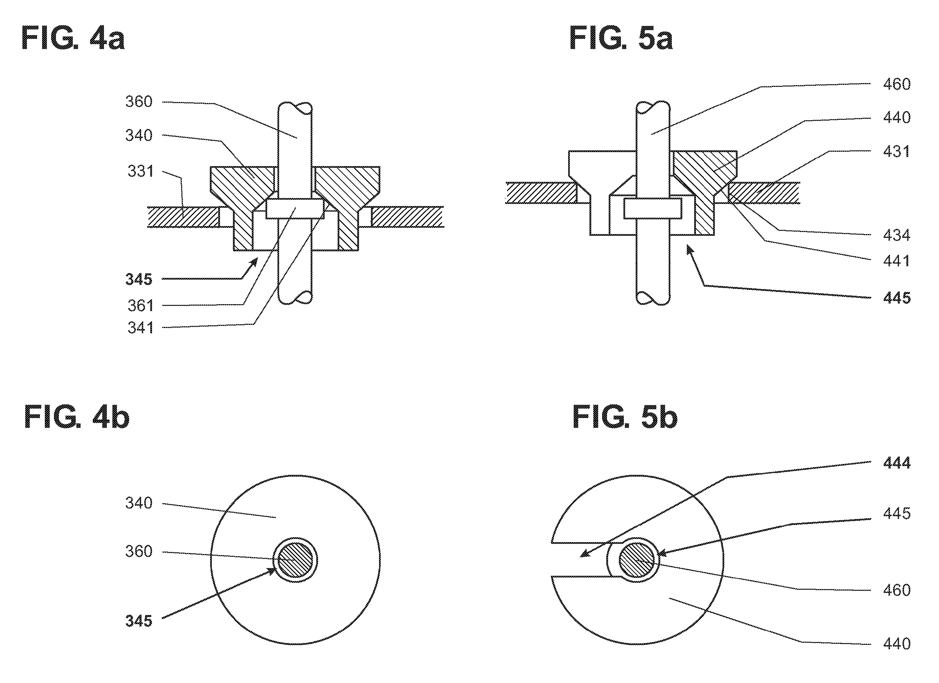

Figur 4a zeigt die Seitenansicht im Schnitt und Figur 4b die Ansicht von Oben eines rotationssymmetrischen Kalibriergewichts 340. Das Kalibriergewicht 340 ist in seiner unmittelbaren Einbauumgebung in Kalibrierposition dargestellt und ist berührungsfrei von der Kalibriergewichtauflage 331 eines nicht vollständig dargestellten Transfermechanismus entkoppelt, um den zu ermittelnden Korrekturwert nicht negativ zu beeinflussen. Der ringförmig ausgebildete Körper des Kalibriergewichts 340 weist eine Bohrung 345 auf, durch die das Kraftübertragungsgestänge 360 mit genügend Spiel berührungsfrei durchgeführt ist. Dabei liegt das Kalibriergewicht mit dem Positionierungsmittel 341 in Form einer, in der Bohrung 345 ausgebildeten Kegelflanke nur auf einer scharfkantig ausgebildeten Kalibriergewichtaufnahme 361 auf, welche mit dem Kraftübertragungsgestänge 360 eines nicht dargestellten Wägemoduls starr verbunden ist.

Figur 5a zeigt die Seitenansicht im Schnitt und die Figur 5b die Ansicht von Oben eines Kalibriergewichts 440, das ähnlich dem in Figur 4 dargestellten Kalibriergewicht 340 ausgestaltet ist. Das Kalibriergewicht 440 ist in seiner Einbauumgebung in Ruheposition dargestellt. Der im Wesentlichen ringförmig ausgebildete Körper des Kalibriergewichts 440 weist eine Bohrung 445 auf, durch die das Kraftübertragungsgestänge 460 mit genügend Spiel berührungsfrei durchgeführt ist. Dabei liegt das Kalibriergewicht mit dem Positionierungsmittel 441 in Form einer Kegelflanke auf einer scharfkantig ausgebildeten Kalibriergewichtauflagestelle 434 der Kalibriergewichtauflage 431 auf. Da das Kalibriergewicht 440 zwischen der nicht dargestellten Wägezelle und dem nicht dargestellten Lastaufnehmer angeordnet ist, verfügt das Kalibriergewicht 440 zwecks leichterem Ein- und Ausbau aus seiner Einbauumgebung über einen Schlitz 444. Durch diesen Schlitz 444, dessen Breite mit dem Durchmesser des Kraftübertragungsgestänges 460 korrespondiert, kann das Kalibriergewicht 440 aus seiner Einbauumgebung entfernt werden, ohne das der Lastaufnehmer vom Kraftübertragungsgestänge 460 getrennt werden muss.

### Bezugszeichenliste

- 100, 10: Mehrfachwägevorrichtung
- 11: Aufnahmestruktur
- 12, 13: beweglicher Keil
- 14: Spindel
- 15: linksgängiges Spindelgewinde
- 16: rechtsgängiges Spindelgewinde
- 18: Steilfläche
- 20A-B: Wägemodul
- 21A-B: Wägezelle
- 22A-B: Lastaufnahmebereich
- 230, 130X-Z, 30: Transfermechanismus
- 431, 331, 231, 131 X-Z, 31: Kalibriergewichtauflage
- 32: starr verbundener Keil
- 33: starr verbundener Keil
- 234A-C, 34A-B: Kalibriergewichtauflagestelle
- 440, 340, 240A-C, 140A-H, 40A-B: Kalibriergewicht
- 441, 341, 41A-B: Positionierungsmittel
- 50A-B: Lastaufnehmer
- 460, 360, 60A-B: Kraftübertragungsgestänge
- 361, 161A-F, 61A-B: Kalibriergewichtaufnahme
- 62A: Positionierungsmittel
- 170X-Z, 70: Hebewerk
- 280, 80: Antrieb
- 90: Befestigungsmittel
- 121: Wägezellengehäuse
- 135: Schubstangen
- 136: Verbindungsgestänge
- 137: Zugfeder
- 138: Verbindungssteg
- 139: Steg
- 181: Aktuator, SMA- Draht
- 182: Umlenkrolle
- 183: Anschluss
- 184: Anschluss
- 238A-C: Übertragungsglied
- 239: Führung, Lager
- 444: Schlitz

## Patentansprüche

1. Mehrfachwägevorrichtung (10) mit mindestens zwei in vorgegebener räumlicher Anordnung miteinander starr verbundenen, unabhängig voneinander betreibbaren Wägemodulen (20A, 20B), wobei jedes Wägemodul (20A, 20B) einen Lastaufnahmebereich (22A, 22B), einen Lastaufnehmer (50A, 50B) und eine mit dem Lastaufnahmebereich (22A, 22B) in Verbindung stehende Kalibriergewichtaufnahme (61A, 61 B) aufweist, sowie mit mindestens je einem, einem jeden Wägemodul (20A, 20B) zugeordneten Kalibriergewicht (40A, 40B), welches mit der Kalibriergewichtaufnahme (61A, 61 B) des zugeordneten Wägemoduls (20A, 20B) koppelbar beziehungsweise von dieser entkoppelbar ist und mit mindestens einem Transfermechanismus (30), **dadurch gekennzeichnet, dass** der mindestens eine Transfermechanismus (30) eine Kalibriergewichtauflage (31) mit daran ausgebildeten, miteinander verbundenen Kalibriergewichtauflagestellen (34A, 34B) für die Kalibriergewichte (40A, 40B) von mindestens zwei zugeordneten Wägemodulen (20A, 20B) aufweist.

2. Mehrfachwägevorrichtung (10) nach Anspruch 1, **dadurch gekennzeichnet, dass** die Kalibriergewichtauflagestellen (34A, 34B) miteinander starr verbunden sind.

3. Mehrfachwägevorrichtung (10) nach Anspruch 1 oder 2, **dadurch gekennzeichnet, dass** jeder Transfermechanismus (30) eine Kalibriergewichtauflage (31), ein Hebewerk (70) und einen Antrieb (80) aufweist.

4. Mehrfachwägevorrichtung (100) nach Anspruch 1 oder 2, **dadurch gekennzeichnet, dass** jeder Transfermechanismus (130X, 130Y, 130Z) eine Kalibriergewichtauflage (131X, 131Y, 131Z) und ein Hebewerk (170X, 170Y, 170Z) beinhaltet und mindestens zwei Transfermechanismen (130X, 130Y) einen gemeinsamen Antrieb aufweisen.

5. Mehrfachwägevorrichtung (10) nach Anspruch 3 oder 4, **dadurch gekennzeichnet, dass** der Antrieb (80) ein Servomotor, ein Linearmotor, ein Spindelantrieb, ein Riemen-Antrieb, ein magnetischer Antrieb, ein mit einer Heizvorrichtung zusammenwirkender Draht aus einer Formgedächtnislegierung oder eine manuell betätigbare Antriebsvorrichtung ist.

6. Mehrfachwägevorrichtung (10) nach einem der Ansprüche 3 bis 5, **dadurch gekennzeichnet, dass** das Hebewerk ein Kniegelenk (170X), eine Welle mit Steuerscheibe, eine Exzenterwelle (231) oder eine Hebeanordnung mit Keilen (70) aufweist.

7. Mehrfachwägevorrichtung (10) nach einem der Ansprüche 1 bis 6, **dadurch gekennzeichnet, dass** die Kalibriergewichtauflage (31) zwischen den Lastaufnehmern (50A, 50B) und den Lastaufnahmebereichen (22A, 22B) der Wägemodule (20A, 20B) angeordnet ist.

8. Mehrfachwägevorrichtung (10) nach einem der Ansprüche 1 bis 6, **dadurch gekennzeichnet, dass** die Kalibriergewichtauflage (231) auf der den Lastaufnehmern (50) abgewandten Seiten der Wägemodule (20A, 20B) angeordnet ist.

9. Mehrfachwägevorrichtung (10) nach einem der Ansprüche 1 bis 8, **dadurch gekennzeichnet, dass** die Kalibriergewichtauflage (31) im Wesentlichen plattenförmig ausgebildet ist und diese Kalibriergewichtauflage (31) Kalibriergewichtauflagestellen (34A, 34B) in Form von Durchbrüchen aufweist.

10. Mehrfachwägevorrichtung (100) nach einem der Ansprüche 1 bis 8, **dadurch gekennzeichnet, dass** die Kalibriergewichtauflage (131X) eine Rahmenstruktur und mit dieser Rahmenstruktur verbunden, Kalibriergewichtauflagestellen in Form von Stegen (139) und/oder Stützen aufweist.

11. Mehrfachwägevorrichtung (10) nach einem der Ansprüche 1 bis 10, **dadurch gekennzeichnet, dass** zwischen der Kalibriergewichtauflage (231) und/oder zwischen der Kalibriergewichtauflagestelle (234A, 234B, 234C) und dem Kalibriergewicht (240A, 240B, 240C) mindestens ein Übertragungsglied (238A, 238B, 238C) angeordnet ist.

12. Mehrfachwägevorrichtung (10) nach einem der Ansprüche 1 bis 11, **dadurch gekennzeichnet, dass** das Kalibriergewicht in Ringform (40, 240C), in U- Form (440), in Kegelform, in Kugelform (240A) oder in Zylinderform (240B) ausgebildet ist.

13. Mehrfachwägevorrichtung nach einem der Ansprüche 1 bis 12, **dadurch gekennzeichnet, dass** das Kalibriergewicht mindestens ein Positionierungsmittel (341, 441) zur räumlichen Positionierung des Kalibriergewichts (340, 440) bezüglich der Kalibriergewichtaufnahme (361), gegebenenfalls auch bezüglich der Kalibriergewichtauflagestelle (431) aufweist.

14. Verfahren zur Kalibrierung einer Mehrfachwägevorrichtung (10) mit mindestens zwei in vorgegebener räumlicher Anordnung miteinander starr verbundenen, unabhängig voneinander betreibbaren Wägemodulen (20A, 20B), wobei jedes Wägemodul (20A, 20B) einen Lastaufnahmebereich (22A, 22B) und eine mit dem Lastaufnahmebereich (22A, 22B) in Verbindung stehende Kalibriergewichtaufnahme (61A, 61 B) aufweist, sowie mit mindestens je einem, einem jeden Wägemodul (20A, 20B) zugeordneten Kalibriergewicht (40A, 40B), welches mit der Kalibriergewichtaufnahme (61A, 61 B) des zugeordneten Wägemoduls (20A, 20B) koppelbar beziehungsweise von dieser entkoppelbar ist und mit mindestens einem Transfermechanismus (30), **dadurch gekennzeichnet, dass** die Kalibriergewichte (40A, 40B) mindestens zweier Wägemodule (20A, 20B) durch mindestens einen Transfermechanismus (30) gleichzeitig bewegt, mit den Kalibriergewichtaufnahmen (61A, 61 B) der Wägemodule (20A, 20B) gekoppelt beziehungsweise von diesen entkoppelt werden.

15. Verfahren nach Anspruch 14, **dadurch gekennzeichnet, dass** die Kalibriergewichte (40A, 40B) mindestens zweier Wägemodule (20A, 20B) gleichzeitig mit den Kalibriergewichtaufnahmen (61A, 61 B) der Wägemodule (20A, 20B) gekoppelt beziehungsweise von diesen entkoppelt werden.
